# EUROPÄISCHE PATENTSCHRIFT

(11) **EP 2 444 832 B1**
(45) Veröffentlichungstag und Bekanntmachung des Hinweises auf die Patenterteilung: **05.08.2020**
(21) Anmeldenummer: 11169989.8
(22) Anmeldetag: 15.06.2011
(51) Int. Cl.: G02B 21/16, G02B 21/00, G02B 21/06

(54) **SPIM-Mikroskop mit STED-Lightsheet**
SPIM microscope with STED light sheet
Microscope SPIM avec nappe lumineuse STED

(30) Priorität: 22.10.2010 DE 102010060121
(43) Veröffentlichungstag der Anmeldung: 25.04.2012
(73) Patentinhaber: Leica Microsystems CMS GmbH, 35578 Wetzlar (DE)
(72) Erfinder: Knebel, Werner, 76709 Kronau (DE); Oestreicher, Wolfgang, 79104 Freiburg (DE)
(74) Vertreter: Schaumburg und Partner Patentanwälte mbB

(56) Entgegenhaltungen:
- WO-A1-2009/100911
- WO-A1-2010/069987
- DE-A1-102008 018 476
- US-A- 5 731 588
- US-B2- 7 554 725

## Beschreibung

Die Erfindung betrifft ein SPIM-Mikroskop mit einer Beleuchtungsquelle, welche einen Beleuchtungs-Lichtstrahl aus einer y-Richtung auf ein abzubildendes Objekt sendet; und einer Kamera, welche in z-Richtung als einer ersten Detektionsrichtung von einem Objekt ausgesendetes Fluoreszenzlicht und/oder reflektiertes Licht erfasst, wobei sich die z-Richtung im Wesentlichen senkrecht zur y-Richtung erstreckt.

Insbesondere biologische Proben sollen schnell und schonend untersucht werden. Oft ist es dazu zweckdienlich, ein dreidimensionales Bild zu erzeugen. Streuungs- und Absorbtionsartefakte sollen vermieden werden, welche durch Wechselwirkung des Beleuchtungslichts mit der Probe selbst entstehen, insbesondere bei der Anwendung von Fluoreszenz-Mikroskopie, bei welcher das Beleuchtungslicht die Funktion eines Anregungslichts zum Anregen von Fluoreszenz hat.

Zur schnellen und probenschonenden, hochaufgelösten Untersuchung mikroskopischer Proben eignet sich insbesondere die sogenannte SPIM-Technik (Selective Plane Illumination Microscopy), die als Beleuchtungslicht ein Lightsheet verwendet, während das durch Fluoreszenz und Reflexion erzeugte Detektionslicht senkrecht zur Beleuchtungsrichtung mit einer Kamera beobachtet wird.

Unter einem Lightsheet versteht man ein Beleuchtungsvolumen mit einem im Wesentlichen rechteckigen Querschnitt, wobei der Querschnitt in einer ersten Querschnittsrichtung (hier z-Richtung) sehr dünn ist und in einer zweiten Querschnittsrichtung (hier x-Richtung) ein deutlich größeres Ausmaß als in der ersten Querschnittsrichtung aufweist. Die Beleuchtungsrichtung (hier y-Richtung) erstreckt sich im Wesentlichen quer zur ersten Querschnittsrichtung (hier z-Richtung) und zweiten Querschnittsrichtung (hier x-Richtung). Das Lightsheet wird mittels einer Zylinderlinse fokussiert, wobei unter einem Fokus bzw. einer Fokuslänge des Lightsheets ein gewisser sich in der Beleuchtungsrichtung (hier y-Richtung) erstreckender Bereich zu verstehen ist, in welchem das Lightsheet besonders dünn ist, so dass sich das Beleuchtungsvolumen wie eine Art Blatt darstellt, d.h. sehr dünn in z-Richtung und deutlich größer in x- und y-Richtung ist.

Die herkömmliche Erzeugung eines Lightsheets mit Hilfe einer Zylinderlinse bei der SPIM-Technik hat den Nachteil, dass das System recht unflexibel ist, beispielsweise einen fest vorgegebenen Fokus und damit ein fest vorgegebenes Beleuchtungsvolumen aufweist. Für eine hohe Auflösung vorteilhaft ist ein möglichst dünner und langgestreckter Fokus. Dieser Fokus kann zur Erzeugung eines dreidimensionalen Bildes in einer Richtung über die Probe geführt werden. Da mit der Länge des Fokus auch seine Breite zunimmt - das heißt die Dicke des Lightsheets zunimmt - reduziert sich damit die z-Auflösung. Das heißt bei einem langgezogenen Fokus, welcher durch Einstellen einer kleinen numerischen Apertur der Beleuchtungsoptik erzeugt wird, wird auch die Dicke der Beleuchtungsebene entsprechend groß. Dies bedeutet, dass die optische Auflösung entlang der optischen Achse in Beobachtungsrichtung ebenfalls gering ist. Es besteht also je nach Anwendung ein Zielkonflikt: Will man eine hohe Eindringtiefe des Beleuchtungslichts erreichen, benötigt man einen langgestreckten Fokus, was aber zugleich die Dicke des Lightsheets vergrößert und damit die Auflösung verringert. Ein langgezogener Fokus wird mit einer kleinen Numerischen Apertur der Beleuchtungsoptik erzeugt.

Unabhängig davon, dass zugleich eine große Eindringtiefe des Beleuchtungslichts bei gleichzeitig hoher Auflösung erreicht werden soll, ist Flexibilität in der Manipulation des Beleuchtungsvolumens grundsätzlich wünschenswert. Beispielsweise gibt es Anwendungen, bei denen ein größeres Beleuchtungsvolumen wünschenswert ist, beispielsweise um in einem bestimmten Volumen des Objekts stattfindende chemische Reaktionen zu betrachten. Im Gegensatz dazu kann aber ein kleineres Beleuchtungsvolumen erwünscht sein, insbesondere ein dünneres Beleuchtungsvolumen aufgrund eines dünneren Lightsheets, damit beispielsweise eine genauere Ebene definiert ist, beispielsweise um Diffusionsgeschwindigkeiten innerhalb des Objekts zu ermitteln.

Aus der deutschen Patentanmeldung mit der Veröffentlichungsnummer DE 102008018476 A1 ist ein SPIM-Mikroskop bekannt, bei welchem ein linienförmiger Beleuchtungs-Lichtstrahl gescannt wird. Die Signalerfassung erfolgt durch einen Zeilendetektor, wozu eine erste Rastereinheit zum Scannen des Beleuchtungs-Lichtstrahls und eine zweite Rastereinheit zum Detektieren mittels eines Zeilendetektors miteinander synchronisiert werden.

Aus der internationalen Patentanmeldung mit der Veröffentlichungsnummer WO 2010/069987 A1 ist ein konfokales STED-Mikroskop mit zwei unterschiedlichen Ablenkungsmitteln und einem mittels Phasenplatte modulierten Beleuchtungs-Lichtstrahl bekannt.

Aus dem US-Patent 5,731,588 ist das Prinzip von STED bekannt.

Aus dem US Patent 7,554,725 ist ein SPIM-Mikroskop bekannt.

Aus der WO 2009/100911 A1 ist ein SPIM-Mikroskop offenbart, mit welchem auch STED Mikroskopie durchgeführt werden kann.

Es ist eine Aufgabe der Erfindung, die Flexibilität des eingangs beschriebenen Mikroskops zu erhöhen, insbesondere mehr Flexibilität in der Wahl des Beleuchtungsvolumens und in der Wahl der Art von Mikroskopie bereitzustellen.

Dies wird gemäß der Erfindung durch die Merkmale im Patentanspruch 1 erreicht. Vorteilhafte Weiterbildungen sind in den Unteransprüchen beschrieben.

Gemäß einer bevorzugten Ausführungsform der Erfindung ist ein Abregungs-Lichtstrahl-Modulator vorgesehen, mittels welchem der Abregungs-Lichtstrahl einer derartigen Modulation unterzogen wird, dass dieser im Querschnitt in z-Richtung wenigstens zwei Intensitätsmaxima mit einer dazwischen befindlichen Nullstelle aufweist, welche sich in z-Richtung im Wesentlichen im Zentrum des Anregungs-Lichtstrahls befindet. Alternativ kann der Abregungsstrahl auch derart moduliert sein, dass die Sideloops (Nebenmaximas) des Anregungslichtstrahls ebenfalls abgeregt werden. Hier ist es vorteilhaft, wenn die Peaks der Sideloops des Anregungslichtstrahls mit den Peaks des Abregungslichtstrahls zusammenfallen. Es ist denkbar, den Anregungslichtstrahl so zu modulieren, dass verstärkte Sideloops entstehen. Dadurch kann das Hauptmaximum länger und dünner gemacht werden. Verstärkte Sideloops (Nebenmaximas) führen im Falle der Nichtabregung zu einer Verschlechterung der Z-Auflösung. Kommt es zu einer Abregung in den Nebenmaxima wird die Auflösung dadurch erhöht.

Überdies können "Tunable Acoustic Gradient Index of Refraction Linsen", kurz TAG Linsen genannt, verwendet werden, welche eine variable Möglichkeit bereitstellen, den Anregungsstrahl zu modulieren. Derartige TAG Linsen stellen ein alternatives Verfahren zum Erzeugen eines Besselbeams dar. In solchen TAG Linsen ist eine lichtbrechende Flüssigkeit innerhalb eines kreisrunden piezoelektrischen Elements enthalten und wird von einem Wechselstrom-Signal angeregt, um einen alternierenden Brechungsindex in der Flüssigkeit zu erzeugen. Änderungen in der Amplitude in der Frequenz des Anregungs-Signals erlauben eine schnelle Änderung des übertragenen Musters. Die mögliche Schaltgeschwindigkeit wird davon bestimmt, dass zwischen den Schaltvorgängen genügend Zeit verbleibt, dass sich ein stabiles Muster ausbilden kann, was hauptsächlich von der Viskosität der Flüssigkeit abhängt. Schaltzeiten zwischen 300 und 2000 µs sind für Flüssigkeits-Viskositäten zwischen 640 cs und 0,65 cs möglich.

Gemäß einer weiteren bevorzugten Ausführungsform der Erfindung ist eine Phasenplatte vorgesehen, welche den Abregungs-Lichtstrahl moduliert. Will man den Abregungsstrahl nur so modulieren, dass die Anregung nur seitlich eingeengt wird, um ein dünneres Lightsheet zu erhalten, reicht eine einzige Phasenplatte. Es ist alternative aber auch möglich, den jeweiligen Anregungspunkt allseitig einzugrenzen, beispielsweise durch eine Vortexfilter mir zirkular angeordneter Phasenplatte, oder es können 2 Phasenplatten vorgesehen sein, welche in einem Winkelversatz von 90 Grad zueinander angeordnet sind, und so eine Eingrenzung der Anregung sowohl in x-Richtung (der Scanrichtung), als auch der z-Richtung (Dicke des sequentiell erzeugten Lightsheets) zu verwirklichen.

Gemäß einer weiteren bevorzugten Ausführungsform der Erfindung ist ein Anregungs-Lichtstrahl-Modulator vorgesehen, mittels welchem der Anregungs-Lichtstrahl zu einem Besselbeam modulierbar ist.

Gemäß einer weiteren bevorzugten Ausführungsform der Erfindung ist der Anregungs-Lichtstrahl-Modulator eine Tunable Acoustic Gradient Index of Refraction (TAG) Linse. Überdies hat die Multiphoton-Anregung den Vorteil, dass Nebenmaxima des modulierten Anregungsstrahls eine um zwei Zehnerpotenzen geringere Anregungswahrscheinlichkeit als die Anregung mit kontinuierlichem Licht aufweist (auch Continuous Wave oder CW Anregung genannt) und dadurch einen geringeren Hintergrund in der Detektion verursachen. Besonders bei der Anregung mit kontinuierlichem Licht kann die Modulation des Abregungsstrahls zum Unterdrücken der Nebenmaxima des Anregungsstrahls sinnvoll sein, wobei dieser Abregungsstrahl ebenfalls mittels einer TAG Linse moduliert werden kann.

Gemäß einer weiteren bevorzugten Ausführungsform der Erfindung ist als der Anregungs-Lichtstrahl-Modulator ein Axicon vorgesehen.

Gemäß einer weiteren bevorzugten Ausführungsform der Erfindung ist wenigstens ein Acousto Optical Element vorgesehen mittels welchem wenigstens der Anregungs-Lichtstrahl modulierbar ist.

Gemäß einer weiteren bevorzugten Ausführungsform der Erfindung ist das Acousto Optical Element ein Acousto Optical Deflector (AOD). Mittels dieses AOD kann der Beleuchtungsstrahl ausgelenkt werden, beispielsweise, um die Scanfunktion bereitzustellen. Anstatt eines AOD kann alternativ auch ein Galvanometer zum Bereitstellen der Scanfunktion verwendet werden.

Gemäß einer weiteren bevorzugten Ausführungsform der Erfindung ist das Acousto Optical Element ein Acousto Optical Tunable Filter (AOTF) zum Einstellen der Wellenlänge des Anregungs-Lichtstrahls und zum Einstellen der Intensität. Der besondere Vorteil liegt darin, dass mit einem AOTF eine Doppelfunktion bereitgestellt wird, nämlich sowohl die Einstellung der Intensität, als auch der Wellenlänge. Besonders die Intensität lässt sich mit AOTF's in weiten Grenzen regeln, nämlich die Ausgangsintensität auf der Ausgangsseite des AOTF lässt sich von fast 100% der Eingangsintensität bis auf wenige Promille der Eingangsintensität herunterregeln.

Gemäß einer weiteren bevorzugten Ausführungsform der Erfindung weist der Abregungs-Lichtstrahl eine konstante Wellenlänge auf. Das hat den besonderen Vorteil, dass eine Modulation der Wellenlänge des Abregungs-Lichtstrahls, beispielsweise mittels eine AOTF's, entfallen kann. Zu diesem Zweck werden in der Mehrfarben-Fluoreszenzmikroskopie bevorzugt solche Farbstoffe ausgesucht, welche zwar eine unterschiedliche Anregungswellenlänge haben, aber mit der gleichen Abregungswellenlänge abgeregt werden können.

Gemäß einer weiteren bevorzugten Ausführungsform der Erfindung ist wenigstens ein Intensitätsregler vorgesehen mittels welchem die Intensitäten des Anregungs-Lichtstrahls und Abregungs-Lichtstrahls einstellbar sind.

Gemäß einer weiteren bevorzugten Ausführungsform der Erfindung beinhaltet der Intensitätsregler ein Acousto Optical Element.

Gemäß der Erfindung ist ein Schalter vorgesehen, mittels welchem ein Betriebsmodus zwischen einem ersten Betriebsmodus in Form von normalem SPIM-Betrieb ohne Zuschaltung des Abregungs-Lichtstrahls und einem zweiten Betriebsmodus in Form von SPIM-plus-STED-Betrieb mit Zuschaltung des Abregungs-Lichtstrahls auswählbar ist.

Gemäß einer weiteren bevorzugten Ausführungsform der Erfindung ist der Schalter derart ausgebildet, dass dieser eine dauerhafte Auswahl zwischen den vorgenannten ersten und zweiten Betriebsmodi einstellt.

Gemäß einer weiteren bevorzugten Ausführungsform der Erfindung ist der Schalter derart ausgebildet, dass dieser mit einer bestimmten Taktfrequenz automatisch zwischen den beiden vorgenannten ersten und zweiten Betriebsmodi hin- und herschaltet.

Gemäß einer weiteren bevorzugten Ausführungsform der Erfindung ist eine Bildverarbeitungseinheit vorgesehen, welche das von der Kamera in der ersten Detektionsrichtung detektierte Licht nach den jeweiligen ersten und zweiten Betriebsmodi mit der Taktfrequenz in 2 Datenströme separiert, welche gleichzeitig ein Bild gemäß dem ersten Betriebsmodus und ein Bild gemäß dem zweiten Betriebsmodus erzeugen.

Gemäß einer weiteren bevorzugten Ausführungsform der Erfindung ist eine Beleuchtungsoptik mit einem im Strahlengang des Anregungs-Lichtstrahls angeordneten optischen Zoom vorgesehen in welchem Linsengruppen relativ zueinander mechanisch verschoben werden und so durch eine Veränderung der numerischen Apertur der Fokus des sequentiell erzeugten Lightsheets verlängert bzw. verkürzt wird, womit die Länge des von dem Lightsheet in dem Objekt ausgeleuchteten Feldes in der y-Beleuchtungsrichtung verlängerbar bzw. verkürzbar ist. Die Beleuchtungsoptik weist vorteilhaft ein Beleuchtungsobjektiv auf. Durch die flexible optische Zoom-Einrichtung kann die Ausdehnung des Lightsheet (in y-Richtung und z-Richtung) entsprechend angepasst werden. Möchte man nur eine dünne Ebene beleuchten, wird die Numerische Apertur der Zoomoptik erhöht, hierbei wird aber die nutzbare Ausdehnung des Lightsheet verringert. Die vorliegende Erfindung schafft auch bei diesem Zielkonflikt dahingehen Abhilfe, dass die Verdünnung des Lightsheets und damit die Verdünnung des beleuchteten Volumens durch Abregung mittels des STED-Strahls erfolgt, womit sich gleichzeitig ein langgestreckter Fokusbereich bei dünnem sequentiell erzeugten Lightsheet verwirklichen lässt. Durch das sequentielle Aufnehmen entlang der y-Richtung (Stitching) kann man Bildfolgen aufnehmen mit erhöhter Auflösung entlang z. Da man die optischen Parameter der Zoomoptik kennt, kann man über geeignete Bildbearbeitung nur den Bereich verwenden und zusammensetzen der die erhöhte Auflösung umfasst.

Gemäß einer weiteren bevorzugten Ausführungsform der Erfindung ist ein Fotodetektor vorgesehen, welcher von dem Objekt entgegen der z-Richtung als eine zweite Detektionsrichtung ausgesendetes Detektionslicht in Form von Fluoreszenzlicht und/oder reflektiertem Licht erfasst. Photodetektoren sind grundsätzlich schneller als Kameras, allerdings liefern diese keine Ortszuweisung, was allerdings auch nicht unbedingt erforderlich ist, weil über den Multiphoton-Beleuchtungsstrahl eine Ortszuweisung hergestellt werden kann, was besonders bei der Multiphoton-Beleuchtung gut möglich ist, weil bei dieser Beleuchtung ziemlich genau bekannt ist, welches kleine Volumen in dem Objekt gerade beleuchtet wird, während für die Signaldetektion deshalb Licht aus allen möglichen Richtungen detektiert werden kann.

Gemäß einer weiteren bevorzugten Ausführungsform der Erfindung wird parallel zu dem in z-Richtung erfassten zweidimensionalen Weitfeldbild entsprechend der SPIM-Technik konfokal ein eindimensionales Bild des Objekts erzeugt, welches eine sich in der x-Richtung ersteckende Linie aufspannt. Das zweidimensionale Bild bildet dann diejenige Beleuchtungsebene ab, welche von dem Lightsheet beleuchtet wird und wie oben beschrieben durch die Zoomoptik beeinflusst werden kann, während parallel dazu ein sogenanntes x-t-Bild erzeugt wird, das heißt ein Linienbild, welches insbesondere in biologischen Proben Aufschluss über die Bewegungsgeschwindigkeit von bestimmten Elementen in dem Objekt geben kann, beispielsweise über die Diffusion von Molekülen oder anderen Zellbestandteilen (Organellen).

Gemäß einer weiteren bevorzugten Ausführungsform der Erfindung ist ein z-Scanner vorgesehen, welcher das Objekt in z-Richtung bewegt, so dass sequenziell mehrere in z-Richtung im Abstand zueinander angeordnete Lightsheets in jeweiligen Beleuchtungsebenen erzeugt werden, wobei ein Abstand zwischen den jeweiligen Lightsheets und der Kamera konstant bleibt. Vorteil ist dabei, dass sowohl die gesamte Beleuchtungsoptik, als auch die SPIM-Detektionsoptik und die wahlweise zuschaltbare konfokale Detektionsoptik ortsfest bleiben, und darüber hinaus der Beleuchtungsstrahl nicht in z-Richtung durch einen Scanner ausgelenkt werden muss, womit sich die Beleuchtungsoptik vereinfacht. Alternativ ist es jedoch auch möglich, die Beleuchtungsoptik zu bewegen, oder den Beleuchtungsstrahl in Z Richtung auszulenken, beispielsweise mittels eines Acousto Optical Deflectors (AOD) oder mittels eines Galvanometers. In diesem Falle sollte dann bevorzugt die SPIM-Detektionsoptik nachgerückt werden, was durch eine Veränderung der Lage des Objektivs der SPIM-Detektionsoptik oder die Verlagerung der gesamten SPIM-Detektionsoptik einschließlich der Kamera möglich ist. Gemäß einer weiteren bevorzugten Ausführungsform der Erfindung ist ein weiterer Schalter vorgesehen, welcher zwischen den folgenden Betriebsmodi umschaltbar ist:
i) konfokale Detektion von Detektionslicht entgegen der y-Beleuchtungsrichtung;
ii) SPIM-Detektion von Weitfeld-Detektionslicht in z-Richtung;
iii) Multiphoton-Detektion von Weitfeld-Detektionslicht in z-Richtung;
iv) gleichzeitige Detektion der vorgenannten konfokalen Detektion und SPIM-Detektion; und
v) gleichzeitige Detektion der vorgenannten konfokalen Detektion und Multiphoton-Detektion.
Gemäß einer weiteren bevorzugten Ausführungsform der Erfindung sind die Betriebsmodi i) - v) jeweils wahlweise mit oder ohne Zuschaltung eines STED-Abregungsstrahls einstellbar. Diese Zu- oder Abschaltung kann zeilenweise oder sogar pixelweise erfolgen, und die Datenströme lassen sich dann trennen. Somit können gleichzeitig 2 verschiedene Bilder erzeugt werden, welchen jeweils unterschiedlich große Beleuchtungsvolumina zugrunde liegen. Diese beiden Bilder lassen sich auch durch ein Overlay zu einem Bild vereinen, beispielsweise um gleichzeitig chemische Reaktionen in einem größeren Beleuchtungsvolumen zu betrachten, aber parallel dazu auch eine Diffusionsgeschwindigkeit in einem kleineren Beleuchtungsvolumen genau zu betrachten als Beispiel über die 2 Dimensionale FCS (Fluorescence Correlation Spectroscopie) Methode.

Die Erfindung wird nachfolgend näher unter Bezugnahme auf die Zeichnung erläutert. In der Zeichnung zeigen:
Figur 1 eine schematische perspektivische Darstellung des Grundprinzips der SPIM-Technik nach dem Stand der Technik;
Figur 2 eine schematische Darstellung des Beleuchtungsstrahlengangs und des Detektionsstrahlengangs der SPIM-Technik nach dem Stand der Technik;
Figur 3 eine schematische Darstellung, welche das STED-Prinzip nach dem Stand der Technik veranschaulicht;
Figur 4 eine schematische Darstellung des erfindungsgemäßen Mikroskops;
Figur 5 eine schematische Darstellung, welche die Modulation des STED-Abregungsstrahls mittels einer Phasenplatte veranschaulicht;
Figur 6 eine schematische Darstellung des erfindungsgemäßen Mikroskops gemäß Figur 4 in der x-Scanrichtung betrachtet, einschließlich Anregungs-, Abregungs- und der Detektionsstrahlengänge;
Figur 7 eine schematische Darstellung des in Figur 6 gezeigten Mikroskops, aber in y-Beleuchtungsrichtung betrachtet;
Figur 8a den Anregungsstrahl im Querschnitt sowie die zugehörige Intensitätsverteilung mit den Koordinaten x, y und z;
Figur 8b den Anregungsstrahl plus den Abregungsstrahl im Verhältnis zueinander sowie das durch Scannen in x-Richtung erzeugte sequenzielle Lightsheet zusammen mit zugehörigen Intensitätsverteilungen mit den Koordinaten x, y und z; und
Figur 9 eine schematische Darstellung einer weiteren Ausführungsform der Erfindung, bei welcher die SPIM-Detektionsoptik zusätzlich zu einer Auswertung eines Multiphoton-Signals genutzt wird.

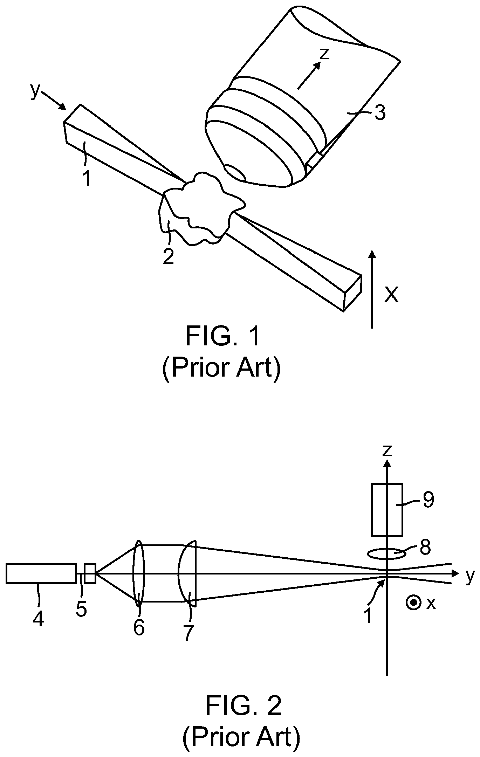

Die Figur 1 zeigt sehr stark vereinfacht das Prinzip eines SPIM-Mikroskops nach dem Stand der Technik, welches nach der sogenannten "Selective Plane Imaging" Technologie arbeitet. Die Beleuchtung erfolgt in einer y-Richtung in Form eines Lightsheets, um in einem Objekt 2 eine bestimmte Ebene zu beleuchten. Die Detektionsrichtung erstreckt sich im Wesentlichen senkrecht zum Lightsheet 1, das heißt in z-Richtung, wobei die Detektion des Detektionslichts mittels eines Objektivs 3 erfolgt. Wie in Figur 1 dargestellt, soll das Lightsheet 1 im Bereich eines inneren Abschnitts des Objekts 2 besonders dünn ausgebildet sein, um eine hohe Auflösung in z-Richtung zu erreichen. Eine hohe Auflösung wird erreicht, indem das Lightsheet 1 innerhalb des Objekts einen engen Fokus aufweist.

Wie weiter unten genauer erläutert wird, kann dieser Fokus in seiner Länge beeinflusst werden, womit das beobachtete Feld größer wird, allerdings auf Kosten der Schärfe des Fokus und damit der Dünne des Lightsheets 1 und somit auf Kosten der Auflösung des Bildes in z-Richtung. Je nach Anwendung kann es jedoch sinnvoll sein, keine allzu hohe Auflösung in z-Richtung einzustellen, aber dafür gleichzeitig ein größeres Feld und ein größeres Beobachtungsvolumen aufgrund eines dickeren Lightsheets zu erfassen. Ein größeres Beobachtungsvolumen kann auch dann sinnvoll sein, wenn in dem erzeugten Bild immer noch die interessierenden Aspekte des Bildes gut genug zu erkennen sind, aber gleichzeitig ein größeres Beobachtungsvolumen insoweit von Vorteil ist, dass damit leichter zu gewährleisten ist, dass das Beobachtungsvolumen auch wirklich den gesuchten Aspekt beinhaltet. Soll dann ein noch höher aufgelöstes Bild von dem interessierenden Aspekt erzeugt werden, kann der Fokus des sequenziell erzeugten Lightsheets 1 dann durch die Zoom-Optik kleiner aber schärfer eingestellt werden.

Im Gegensatz zur konfokalen Scan-Mikroskopie erfordert die Detektion des Detektionslichts in z-Richtung nach der SPIM-Technik eine Ortszuweisung, da es sich um Weitfeld-Mikroskopie handelt. Diese Ortszuweisung wird üblicherweise mit einer Kamera erzeugt, beispielsweise einer CCD-Kamera oder CMOS-Kamera. Will man mittels der SPIM-Technologie ein dreidimensionales Bild des Objekts 2 erzeugen, kann das Lightsheet 1 oder das Objekt in z-Richtung gescannt werden und die aus den jeweiligen Beleuchtungsebenen gewonnenen Bilder können zu einem dreidimensionalen Bild zusammengesetzt werden. Diesen Bildverarbeitungsvorgang nennt man auch "Rendering", hier in z-Richtung.

In Figur 2 ist ein herkömmlicher Beleuchtungs-Strahlengang eines SPIM-Mikroskops schematisch dargestellt. Ein Laser 4 erzeugt einen Beleuchtungs-Lichtstrahl 5, welcher von einem Strahlaufweiter auf eine Kollimatorlinse 6 gesendet wird, welcher eine Zylinderlinse 7 nachgeschaltet ist, welche das Lightsheet 1 auf das Objekt fokussiert. Eine Objektivlinse sammelt das Detektionslicht und richtet es in eine Kamera 9. Der Fokus des Lightsheets kann durch Verschieben von Linsenbaugruppe verändert werden, in diesem stark vereinfachten Beispiel gemäß Figur 2 durch eine Verschiebung der Zylinderlinse 7 relativ zu der Kollimatorlinse 6.

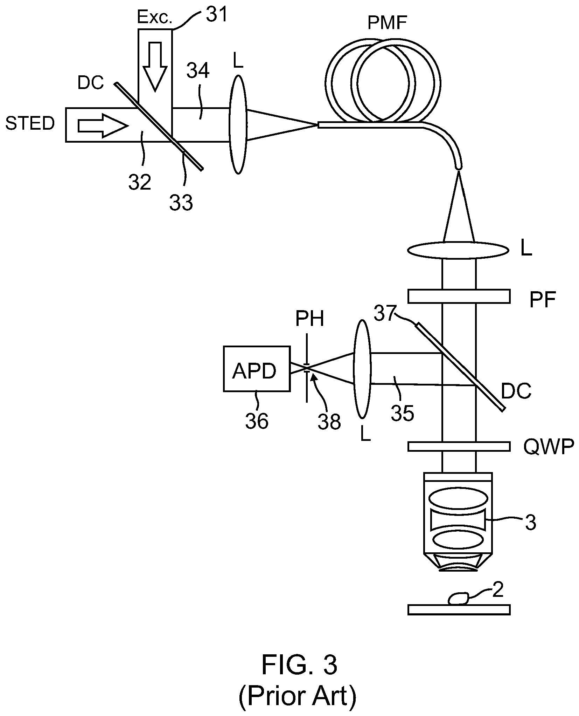

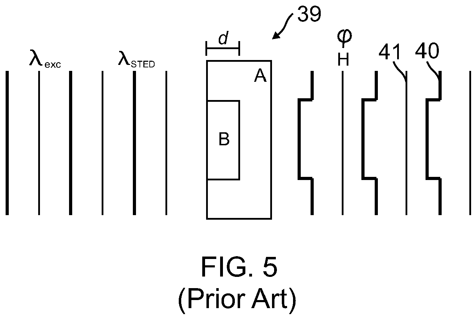

Erfindungsgemäß kann das Lightsheet 1 durch die wahlweise Zuschaltung eines STED-Abregungsstrahls (Stimulated Emission Depletion) weiter verjüngt werden, das heißt dünner gestaltet werden, um eine höhere Auflösung in z-Richtung zu erreichen. Der aus dem Stand der Technik bekannte grundsätzliche Aufbau eines STED-Mikroskops ist in Figur 3 gezeigt. Ein Anregungsstrahl 31 und ein Abregungsstrahl 32 werden mittels eines Strahlvereinigers, hier beispielsweise mittels eines dichroitischen Filters, zu einem gemeinsamen Strahlengang 34 vereinigt, welcher durch ein Objektiv 3 auf ein Objekt 2 gerichtet wird. Mehrere andere optische Elemente können zwischengeschaltet sein, beispielsweise Linsen, lichtleitende Fasern, oder Farbfilter. Der Abregungsstrahl wird üblicherweise in seiner Intensitätsverteilung in seiner Phase moduliert, was beispielsweise durch Phasenplatten erfolgen kann, wie weiter unten anhand von Figur 5 erläutert, aber auch durch geeignet gestaltete Linsen erfolgen kann. Die Modulation erfolgt so, dass der Abregungsstrahl in seiner Mitte eine Nullstelle aufweist, das heißt eine Intensität von Null oder zumindest eine sehr geringe Intensität, während ringsum möglichst gleichmäßiges, ringförmiges Intensitätsmaximum vorliegt. Die für die Fluoreszenz-Mikroskopie verwendeten Farbstoffe reagieren auf eine bevorzugte Anregungswellenlänge und Abregungswellenlänge, bei welcher sich Fluoreszenz besonders gut anregen bzw. abregen lässt. Üblicherweise sind Anregungs- und Abregungs-Wellenlängen unterschiedlich und der Anregungsstrahl und Abregungsstrahl werden für den jeweiligen Bildpunkt zeitversetzt auf das Objekt gesendet. In diesem Fall spricht man von gepulstem STED, jedoch hat sich gezeigt, dass auch Mischformen denkbar sind.
- Gepulste Anregung mit gepulster zeitversetzter Abregung
- CW (Continuous Wave) Anregung mit CW Abregung
- Gepulste Anregung mit CW Abregung
- Gepulste MP (Multiphoton) Anregung mit gepulster Abregung
- Gepulste MP (Multiphoton) Anregung mit CW Abregung

Durch die Anregung lässt sich ein Bildpunkt bestimmter Größe zur Fluoreszenz anregen, um kurz darauf rings des Anregungszentrums abgeregt zu werden, wodurch sich der Fluoreszenzlicht emittierende Bildpunkt des Objekts 2 zu einem kleineren Bildpunkt einengen lässt, um damit die Auflösung zu erhöhen. Bei Mehrfarben-Fluoreszenzmikroskopie verwendet man unterschiedliche Farbstoffe, welche sich dadurch unterscheiden, dass diese auf unterschiedliche Anregungswellenlängen reagieren, d.h. durch Anregungslicht unterschiedlicher Wellenlängen besonders stark zur Fluoreszenz angeregt werden. Bevorzugt wählt man diese Farbstoffkombination aber auch so aus, dass diese durch eine gemeinsame, gleiche Abregungswellenlänge besonders gut abgeregt werden, so dass vermieden wird, unterschiedliche Abregungs-Wellenlängen bereitstellen zu müssen.

Das Detektionslicht 35, welches von dem Objekt 2 durch das Objektiv 3 zurückgesendet wird, kann von einem Strahlteiler, hier ebenfalls ein dichroitischer Spiegel 37, durch eine Linse und geeignete Apertur 38 zum Eliminieren von Streulicht auf einen Fotodetektor 36 gesendet werden.

In dem in Figur 3 dargestellten Beispiel zur Erläuterung des grundsätzlichen Aufbaus eines STED-Mikroskops sind der Anregungslichtstrahl und der Abregungslichtstrahl zu einem gemeinsamen Strahlengang vereint. Der Detektionsstrahlengang läuft über einen gewissen Bereich koaxial, aber mit entgegengesetzter Richtung im Vergleich zum Anregungslichtstrahl und dem Abregungslichtstrahl, bis dieser von dem dichroitische Spiegel 37 seitlich zu dem Fotodetektor 36 ausgekoppelt wird. Dies ist eine besonders platzsparende Anordnung, aber es versteht sich, dass Abregungslichtstrahl auch über einen gesonderten Strahlengang durch eine separate Abregungsstrahlen-Optik geführt werden kann, wodurch sich der Abregungsstrahl flexibler unabhängig von der Beleuchtungsoptik moduliert werden kann.

Die Modulation des Abregungsstrahls 40 mittels einer Phasenplatte 39 ist in Figur 5 dargestellt. Sowohl die Phase, als auch die Intensitätsverteilung lässt sich mit derartigen Phasenplatten 39 modulieren. Dabei ist die Phasenplatte derart gestaltet, dass zwar der Abregungsstrahl 40 moduliert wird, nicht aber der Anregungsstrahl 41, d.h. die Modulation erfolgt in Abhängigkeit von der Wellenlänge, welche für den Abregungsstrahl 40 unterschiedlich im Vergleich zum Anregungsstrahl 41 ist.

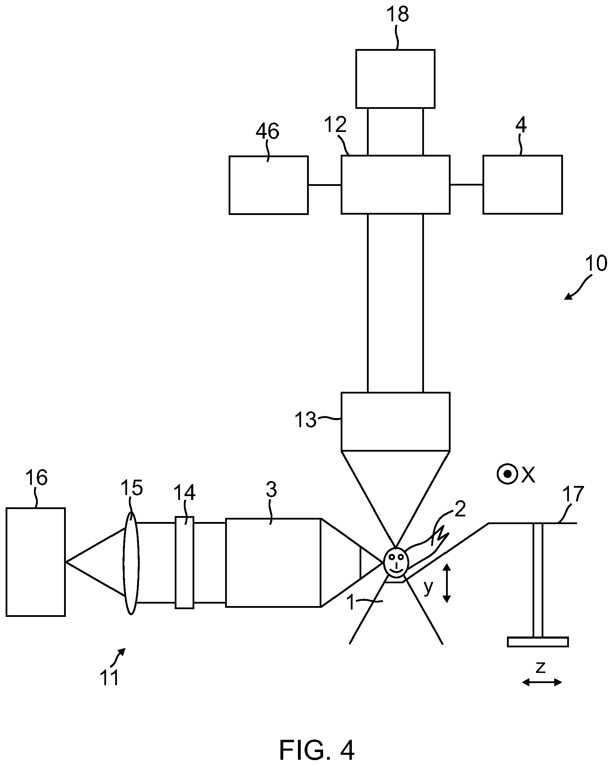

Figur 4 zeigt den schematischen Aufbau des erfindungsgemäßen SPIM-Mikroskops, wobei ein Beleuchtungsoptik-Strahlengang mit dem Bezugszeichen 10 bezeichnet ist, und ein SPIM-Detektionslicht-Strahlengang mit dem Bezugszeichen 11 bezeichnet ist. Der Beleuchtungsoptik-Strahlengang 10 hat außerdem die Funktion eines konfokalen Detektionslicht-Strahlengangs, nur in umgekehrter Richtung im Vergleich zur Beleuchtungsrichtung.

Zunächst wird der Beleuchtungsoptik-Strahlengang erläutert; Ein Laser 4 erzeugt Beleuchtungslicht, welches über einen Scanner 12 einer Zoom-Optik 13 zugeführt wird. Der Scanner 12 erzeugt ein sequenzielles Lightsheet 1, mittels welchem das Objekt 2 beleuchtet wird. Zum sequenziellen Erzeugen des Lightsheets 1 wird der vom Laser 4 erzeugte Beleuchtungs-Laserstrahl in einer x-Richtung gescannt, das heißt gemäß Figur 4 aus der Zeichenebene heraus bzw. in die Zeichenebene hinein. Der Laserstrahl kann dazu beispielsweise einen kreisrunden Querschnitt aufweisen, aber alternativ auch in seiner Querschnittsform moduliert sein, beispielsweise einen ovalen Querschnitt aufweisen, wobei sich die längere Achse des ovalen Querschnitts in x-Richtung erstreckt. Ebenso kann der Beleuchtungs-Laserstrahl beispielsweise rechteckig sein, oder jede andere beliebige Form aufweisen.

Der SPIM-Detektionslicht-Strahlengang 11 erstreckt sich in z-Richtung, das heißt im Wesentlichen senkrecht zur y-Richtung, in welcher sich der Beleuchtungs-Strahlengang 10 erstreckt. Es kann von Vorteil sein, leicht von dem senkrechten Beziehung zwischen dem Beleuchtungsstrahlengang und Detektionsstrahlengang abzuweichen, d.h. kleinere oder größere Winkel als 90° zwischen den beiden Strahlengängen zu wählen, beispielsweise um Teile oder Partikel innerhalb des Objektes etwas zu hinterleuchten. Es können auch mehrere Bilder mit unterschiedlichen Winkeln aufgenommen und zusammengesetzt werden, was man auch als mSPIM-Technik bezeichnet. Nachfolgend wird der Einfachheit halber von einer rechtwinkligen Beziehung ausgegangen, welche auch abweichende Winkel mit umfassen soll, wobei diese aber in einem einigermaßen engen Bereich um die 90° zu verstehen sind. Das Detektionslicht, welches von dem Objekt 2 entweder durch Reflexion oder bevorzugt Fluoreszenzlicht-Emissionen ausgeht, wird von dem Objektiv 3 erfasst. Besonders bei Mehrfarben-Detektion ist hinter das Objektiv ein Farbfilter 14 geschaltet, welcher nach Bedarf Detektionslicht bestimmter Wellenlängen herausgefiltert, welches dann über eine Tubuslinse 15 einer Kamera 16 zugeführt wird, beispielsweise einer CCD-Kamera 16.

Ein weiterer Laser 46 ist vorgesehen, welcher Abregungslicht einer bestimmten Wellenlänge erzeugt. Dieses Abregungslicht unterscheidet sich in seiner Wellenlänge von dem Anregungslicht. Üblicherweise hat das Abregungslicht eine größere Wellenlänge als das Anregungslicht. Bei Mehrfarbenmikrokopie werden die Farbstoffe so ausgewählt, dass diese zwar unterschiedliche Anregungswellenlängen aufweisen, aber im Wesentlichen die gleiche Abregungswellenlänge. Das hat den Vorteil, dass die Abregungswellenlänge mit einem Laser bereitgestellt werden kann, der genau diese Abregungswellenlänge liefert, und eine Modifikation der Wellenlänge ist nicht erforderlich, wodurch der entsprechende Aufwand für eine Wellenlängenmodifikation eingespart werden kann, beispielsweise ein Acousto Optical Element (AOTF) und entsprechend ein Frequenzgenerator zum Ansteuern des AOTF entfallen kann. Bei STED sind ca. 20 Farbstoffe bekannt, um ein Beispiel zu nennen sind Anregung mit einer Wellenlänge von 490 nm, Abregung mit 600 nm, oder Anregung mit 440 nm, Abregung mit 532 nm bekannt. Sowohl die Anregung, als auch die Abregung kann in der Frequenz als auch der Intensität durch ein AOTF eingestellt werden.

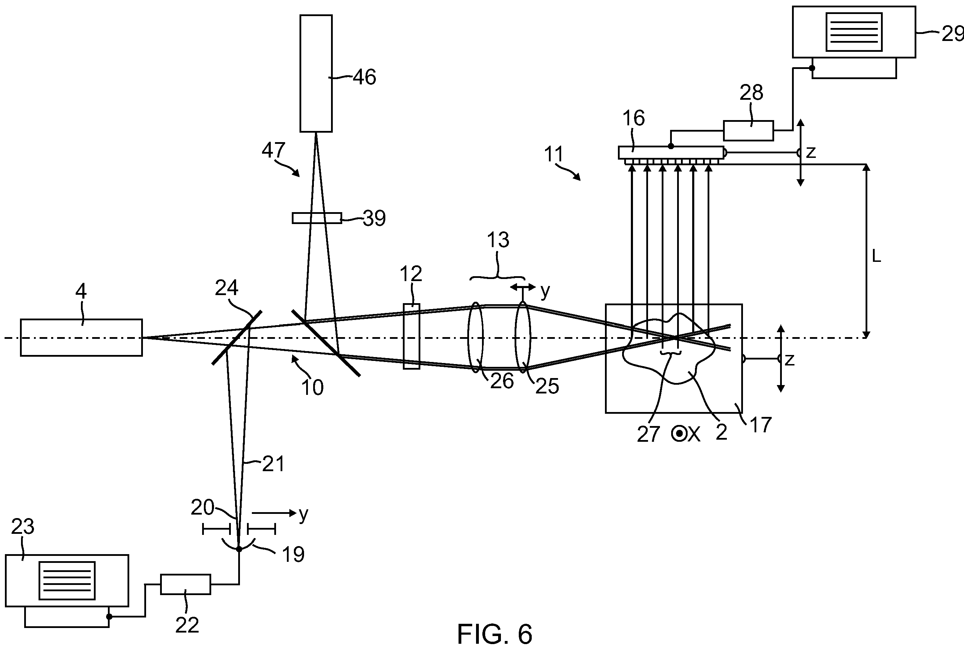

Wie bereits oben anhand von Figur 3 erläutert, kann das Abregungslicht entweder über die gleiche Optik wie das Anregungslicht gesendet werden, d.h. den gleichen Strahlengang folgen, oder über einen separaten Strahlengang gesendet werden, wie beispielsweise in der nachfolgenden Figur 6 dargestellt. Im Ausführungsbeispiel nach Figur 4 wird das vom Laser 4 erzeugte Anregungslicht und das vom Laser 46 erzeugte Abregungslicht über den gemeinsamen Scanner 12 gescannt.

Zur Erzeugung eines dreidimensionalen Bildes kann ein Objektträger 17 in z-Richtung gescannt werden, um sequenziell verschiedene Beleuchtungsebenen in dem Objekt 2 zu beleuchten, wovon jede Beleuchtungsebene ihrerseits durch einen in x-Richtung gescannten Laserstrahl und ein dadurch in der jeweiligen Ebene erzeugtes sequenzielles Lightsheet 1 beleuchtet wird. Die Mehrzahl von in z-Richtung benachbarten, jeweils sequenziell aufgebauten Lightsheets 1 können dann durch "Rendering" in z-Richtung zu einem dreidimensionalen Bild zusammengesetzt werden.

Für den Fall, dass dreidimensionale Bilder durch "Rendering" mit z-Trieb erzeugt werden sollen, liegt im Bewegen des Objekts 2 ein Vorteil darin, dass dann der Abstand zwischen den jeweiligen benachbarten Beleuchtungsebenen im Inneren des Objekts und dem Objektiv immer gleich bleibt, weil weder die Lage des Beleuchtungsstrahls, noch der Kamera 16 verändert wird. Alternativ ist es allerdings auch möglich, das Lightsheet 1 in z-Richtung zu scannen, beispielsweise durch ein Galvanometer. Allerdings muss dann das Objektiv 3 nachgerückt werden, damit der Abstand zwischen der jeweiligen Beleuchtungsebene und dem Objektiv konstant bleibt. Alternativ könnte natürlich auch die gesamte SPIM-Detektions-Optik nachgerückt werden, welche das Objektiv 3, den Filter 14, die Tubuslinse 15 und die Kamera 16 beinhaltet.

Der Beleuchtungsoptik-Strahlengang 10 kann wie bereits erwähnt außerdem die Funktion eines konfokalen Detektionslicht-Strahlengangs aufweisen, wozu der Detektor 19 vorgesehen sein kann, der von dem Objekt 2 in y-Richtung reflektiertes und/oder emittiertes Fluoreszenzlicht erfasst. Gleichzeitig mit der Bilddetektion über den SPIM-Detektionslicht-Strahlengang 11 ist damit auch parallel eine konfokale Bilddetektion möglich, weil das Lightsheet 1 sequenziell durch Scannen in x-Richtung aufgebaut wird. Das konfokal erzeugte Bild ist eine Dimension geringer als das mittels der SPIM-Detektion erfasste Bild. Wird beispielsweise nur ein zweidimensionales Bild mittels der SPIM-Detektion erfasst, also ein Bild in nur einer Beleuchtungsebene, wird gleichzeitig konfokal ein sogenanntes x-t Bild erfasst, das heißt ein eindimensionales Linienbild. Das kann beispielsweise zur Ermittlung der Diffusionsgeschwindigkeit von bestimmten Molekülen nützlich sein, welche mit einem Marker markiert sein können oder eingefärbt sein können, um Fluoreszenzlicht zu emittieren, während das simultan betrachtete zweidimensionale SPIM-Bild andere Aufschlüsse geben kann, beispielsweise welche Moleküle sich mit welchen anderen Molekülen wo in der betrachteten Beleuchtungsebene in dem Objekt verbinden.

Entsprechendes gilt für den Fall, dass mittels der SPIM-Detektion ein dreidimensionales Bild mit dem z-Trieb aufgebaut wird, d.h. dass dann parallel dazu konfokal ein zweidimensionales Bild erfasst wird. So kann beispielsweise ermittelt werden, welche Moleküle sich räumlich gesehen wo innerhalb des Objekts miteinander verbinden, während parallel die Diffusionsgeschwindigkeit von Molekülen durch bestimmte Ebenen erfasst werden kann. Die simultane Detektion eines SPIM-Bildes mit der Dimension "n" und ein parallel dazu konfokal erfasstes Bild mit der Dimension "n-1" lässt daher in Zusammenschau zusätzliche Aufschlüsse zu, beispielsweise zusätzliche Geschwindigkeits-Information zu, mit welcher einzelne Elemente, beispielsweise Moleküle oder andere Elemente, sich innerhalb des Objekts 2 bewegen. Dies findet insbesondere in der Mikroskopie von lebenden Organismen neue Anwendungsgebiete.

Figur 6 zeigt ein weiteres Ausführungsbeispiel der Erfindung. Gleiche Elemente sind mit gleichen Bezugszeichen bezeichnet wie in den vorangehenden Figuren.

So ist auch hier der SPIM-Detektionslicht-Strahlengang mit dem Bezugszeichen 11 bezeichnet, während der Beleuchtungs-Strahlengang mit dem Bezugszeichen 10 bezeichnet ist. Auch in diesem Ausführungsbeispiel gemäß Figur 6 dient der Beleuchtungs-Strahlengang 10 zusätzlich als konfokaler Detektions-Strahlengang, wobei die Signaldetektion durch eine Fotodiode 19 erfolgt, welche durch eine Apertur 20 konfokal Detektionslicht 21 empfängt, und ein entsprechendes Signal über eine Bildverarbeitungseinheit 22 in einen Monitor 23 einspeist. Das Detektionslicht wird mittels eines dichroitischen Spiegels 24 zu der Fotodiode 19 hin abgelenkt. Anstelle der Fotodiode 19 können auch andere Lichtsensoren, beispielsweise Avalanche-Dioden, Photomultiplier oder eine Kamera vorgesehen sein. Da es sich um eine konfokale Bilddetektion handelt, ist jedoch keine Ortszuweisung erforderlich, weil diese Ortszuweisungs-Information über den gescannten Beleuchtungs-Lichtstrahl vorhanden ist, das heißt es ist bekannt, welcher Bildpunkt des Objekts gerade eben beleuchtet wurde, und entsprechend ist auch bekannt, dass das kurz darauf von der Fotodiode empfangene Signal diesem Bildpunkt zuzuordnen ist. Der Aufwand für eine Kamera ist daher für die konfokale Detektion nicht erforderlich.

Zur Veränderung des Fokus des sequenziell erzeugten Lightsheets 1 lässt sich eine Zoom-Linse 25 relativ zu einer weiteren Linse 26 in y-Richtung verschieben. In der Praxis wird es sich um eine Linsengruppe handeln, der Einfachheit halber ist jedoch hier exemplarisch eine Zoom-Linse 25 dargestellt. Die Zoom-Optik 13 in Kombination mit dem Beleuchtungsobjektiv (Makroobjektiv) stellt somit einen optischen Zoom bereit, mittels welchem ein Fokusbereich 27 in seiner Länge veränderbar ist. Hierzu gilt, je schärfer der Fokus, desto kürzer die brauchbare Fokuslänge, aber gleichzeitig desto dünner das Lightsheet 1 in diesem Fokusbereich 27. Der Einfachheit der Darstellung halber wurde die Details der SPIM-Detektions-Optik in der Darstellung gemäß Figur 6 weggelassen, wie diese Optik beispielsweise in Figur 4 dargestellt das Objektiv 3, den Filter 14, und die Tubuslinse 15 aufweist. Die schematisch dargestellte CCD-Kamera 16 stellt eine Ortszuweisung in der x-y-Ebene für das in z-Richtung empfange Detektionslicht bereit. Über eine SPIM-Bildverarbeitungseinheit 28 werden die von der CCD-Kamera empfangenen Signale verarbeitet und an den SPIM-Monitor 29 weitergeleitet. Sollen unterschiedliche Ebenen in dem Objekt 2 beleuchtet werden, kann der Objektträger 17 in z-Richtung bewegt werden. Wie in dieser Darstellung gemäß Figur 6 deutlich zu erkennen ist, würde die Länge L, das heißt der Abstand zwischen der Beleuchtungsebene und der CCD-Kamera, dabei immer konstant bleiben. Wie bereits anhand von Figur 4 erläutert, ist es aber auch möglich, den Beleuchtungsstrahl in z-Richtung bei ortsfestem Objekt 2 zu verlagern, und stattdessen die Position der CCD-Kamera zu verändern, oder eventuell leichter zu realisieren, die Lage des Objektivs 3 relativ zu der CCD-Kamera 16 zu verändern.

Der von dem Laser 46 erzeugte Abregungslichtstrahl - auch STED-Strahl genannt - wird gemäß diesem Ausführungsbeispiel über einen separaten Abregungs-Strahlengang 47 eingespeist. Analog zum Beleuchtungsstrahl wird dieser zunächst aufgeweitet, und im weiteren Verlauf durch die gemeinsame Zoomoptik fokussiert.

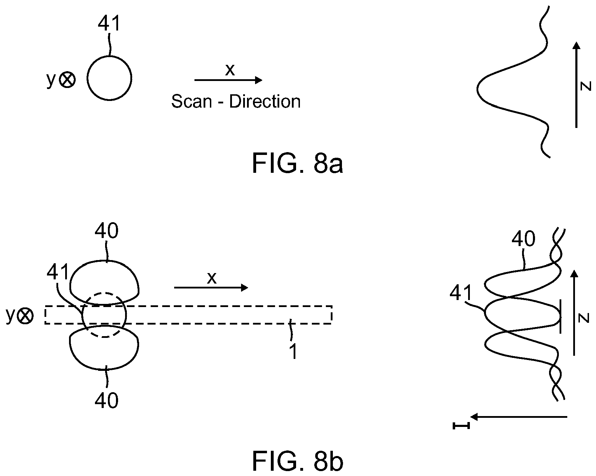

Über einen dichroitischen Spiegel vor dem Scannermodul 12 wird der Abregungslichtstrahl dann in seinem Strahlengang so umgelenkt, dass der Abregungs-Strahlengang koaxial zum dem Anregungs-Strahlengang verläuft. Die Modulation des Abregungsstrahls erfolgt mittels der Phasenplatte 39, welche bereits oben anhand von Figur 5 erläutert wurde. Die Art der Modulation des Abregungsstrahls wird weiter unten noch anhand von den Figuren 8a und 8b näher erläutert.

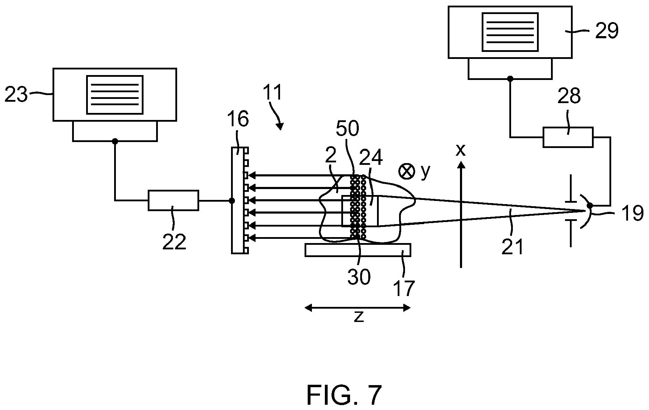

Die Figur 7 zeigt das in Figur 6 dargestellte Ausführungsbeispiel, allerdings in einer anderen Beobachtungsrichtung, nämlich in Richtung des Beleuchtungsstrahls, das heißt in y-Richtung gesehen. Gezeigt sind hier insbesondere die einzelnen Beleuchtungspunkte 30, welche in x-Richtung gescannt werden, um so sequenziell das Lightsheet 1 zu erzeugen, sowie die Abregungspunkte 50, welche in einer Reihe parallel zu den Beleuchtungspunkten ebenfalls in x-Richtung gescannt auf das Objekt 2 gesendet werden. Der dichroitische Spiegel 24 dient zum Ablenken des Detektionslichts zu der Fotodiode 19. Der Objektträger 17 kann in z-Richtung gescannt werden, das heißt zu der CCD-Kamera 16 hin bewegt bzw. von dieser weg bewegt werden, um unterschiedliche Beleuchtungsebenen in dem Objekt 2 zu beleuchten.

Grundsätzlich ist es auch möglich, den Anregungsstrahl und den Abregungsstrahl mit nur einem einzigen Laser 4 (Weisslichtlaser) zu erzeugen. Zu diesem Zweck kann der Strahl geteilt werden, und ein Teil des Strahls kann durch ein Acousto Optical Element wie beispielsweise einen Acousto Optical Tunable Filter (AOTF) in seiner Wellenlänge selektiert werden. Bei Verwendung von gepulsten Lasern kann ein Zeitversatz zwischen Anregungs- und Abregungsstrahl auch durch sogenannte Delay Stage bereitgestellt werden.

Die Beziehung zwischen dem Anregungslichtstrahl und dem Abregungslichtstrahl ist in den Figuren 8a und 8b dargestellt. Figur 8a zeigt einen kreisrunden Anregungsstrahl 41 im Querschnitt. Die Richtungen x, y und z, wie sie in den Figuren 4 und 5 eingezeichnet sind, sind auch in den Figuren 8a und 8b eingezeichnet. Ein Intensitätsprofil des Anregungsstrahls ist auf der rechten Seite gezeigt, und folgt üblicherweise einer gaußschen Verteilung - abgesehen von relativ kleinen Nebenmaxima aufgrund von Beugung. Figur 8b zeigt einen Abregungsstrahl 40, welcher so moduliert wurde, dass dieser beidseitig des Anregungsstrahls 41 ein Intensitätsmaximum aufweist, sowie eine dazwischen befindliche Nullstelle aufweist, in welcher die Intensität Null oder zumindest äußerst gering ist. Wie in Figur 8b auch zu erkennen ist, sind die beidseitig der Nullstelle angeordneten Intensitätsmaxima des Abregungsstrahls 40 in ihrem Querschnitt nicht kreisrund, sondern weisen in ihrem Querschnitt in einem dem Zentrum des Anregungsstrahls zugewandten Abschnitt eine flachere Krümmung auf als auf ihrer dem Anregungszentrum abgewandten Seite. Als sequenziell erzeugtes Lightsheet 1, welches in Figur 8b gestrichelt eingezeichnet ist, bleibt dann ein schmaleres Band in dem zentralen Bereich übrig, in welchem das Abregungslicht die Fluoreszenz nicht abgeregt hat. Rechts neben den Querschnitten von Anregungsstrahl 41, Abregungsstrahl 40, und sequenziell erzeugtem Lightsheet 1, sind die Intensitätsverteilung der Intensität I des Anregungsstrahls 41 und des Abregungsstrahls 40 auf der rechten Seite in Figur 8b dargestellt.

Aus Figur 8b wird ein weiterer Vorteil der Erfindung deutlich, nämlich dass im Gegensatz zu der herkömmlichen konfokalen STED-Mikroskopie keine Eingrenzung des Beleuchtungspunkts durch eine ringsum wirksame Abregung erfolgen muss, sondern eine nur seitliche wirksame Eingrenzung erfolgt, um das sequentiell erzeugte Lightsheet dünner zu machen. Damit fällt die Modulation des Abregungsstrahls einfacher aus, d.h. kann mit nur einer Phasenplatte 39 erfolgen, wie diese in Figur 5 dargestellt ist.

In einem Sonderfall ist es auch möglich, das Lightsheet nur einseitig durch einen Abregungsstrahl zu verdünnen. Durch gezielte Modulation des Abregungsstrahls kann ein einseitiges Abregungsstrahlprofil erzeugt werden, welches eine steile Flanke aufweist und ein Intensitätsminimum aufweist, vorteilhaft im Bereich des Maximums der Anregungsintensität. Andere Querschnittsformen wie oval oder quasi rechteckig können auch bei einem einseitigen Abregungsstrahl von Vorteil sein.

Es versteht sich, dass alternativ auch eine Ringsum-Abregung erfolgen kann, welche durch einen donutförmigen Abregungsstrahl erfolgen kann, was beispielsweise durch einen Vortexfilter mit einer zirkular angeordneten Phasenplatte erfolgen kann. Dies hätte einige Vorteile, wenn parallel zu der SPIM-Signal-Detektion 90 Grad zur Beleuchtungsrichtung auch eine konfokale Detektion entgegen der Beleuchtungsrichtung erfolgt, wie weiter oben erläutert ist.

Der STED-Abregungsstrahl lässt sich wahlweise zuschalten oder abschalten, was auch zeilenweise oder pixelweise in x-Richtung möglich ist. Da die Information vorliegt, wann der Abregungsstrahl zu- bzw. abgeschaltet ist, lassen sich die entsprechenden Datenströme trennen, d.h. in einen ersten Datenstrom zur Erzeugung eines Bildes aufgrund eines dicken Lightsheets und dementsprechend mit einer größeren Beleuchtungsfläche (auf den Querschnitt des Beleuchtungsfokus bezogen) und einem größerem Beleuchtungsvolumen und einen zweiten Datenstrom zur Erzeugung eines Bildes aufgrund eines dünneren Lightsheets mit einer kleineren Beleuchtungsfläche (auf den Querschnitt des Beleuchtungsfokus bezogen) und einem kleineren Beleuchtungsvolumen. Somit lassen sich simultan ein in z-Richtung hochauflösendes Bild unter Zuschaltung von dem STED-Strahl erzeugen, und ein in z-Richtung weniger hochauflösendes Bild ohne Zuschaltung des STED-Strahls erzeugen, welches allerdings den Vorteil hat, ein größeres Volumen im Inneren des Objekts zu beleuchten.

Unabhängig von der Zu- oder Abschaltung des STED-Strahls lässt sich mit diesem Mikroskop parallel ein SPIM-Mikroskopie-Bild der Dimension n und ein konfokal erzeugtes Bild der Dimension n-1 erzeugen, wobei diese Bilder wahlweise oder auch parallel in z-Richtung hochauflösend oder weniger hochauflösende durch Zu- oder Abschalten des STED-Strahls erzeugt werden können. Insgesamt lassen sich also gleichzeitig 4 separate Datenströme erzeugen, welche die folgenden Datensätze erzeugen können:
i) 3-dimensionaler Datensatz (SPIM) hochauflösend, aber Abbildung kleineres Volumen des Objekts;
ii) 3-dimensionales Datensatz (SPIM) geringer auflösend, aber Abbildung größeres Volumen des Objekts;
iii) 2-dimensonales konfokales Bild in z-Richtung hochauflösend; und
iv) 2-dimensionales konfokales Bild in z-Richtung geringer auflösend.

Wenn nur eine Ebene mit dem Lightsheet ausgeleuchtet werden soll, dann lassen sich gleichzeitig die folgenden Bilder erzeugen:
i) 2-dimensionales Bild (SPIM) hochauflösend, aber kleineres Volumen des Objekts;
ii) 2-dimensionales Bild (SPIM) geringer auflösend, aber größeres Volumen des Objekts;
iii) 1-dimensonales konfokales Bild x-t in z-Richtung hochauflösend; und
iv) 1-dimensionales konfokales Bild x-t in z-Richtung geringer auflösend.

Die Anzahl der Lightsheets in z-Richtung ist nicht abhängig von der x-Dimension, man kann also unterschiedliche Bildformate angeben, z.B. Anzahl der Bildpunkte in x-Richtung 512, die in z-Richtung können mehr oder weniger sein. Um einen möglichst lückenlosen Datensatz in z-Richtung zu bekommen, muß man den Vorschub in z-Richtung möglichst so wählen, dass immer ein gewisser Überlapp (Nyquist Theorem) vorhanden ist.

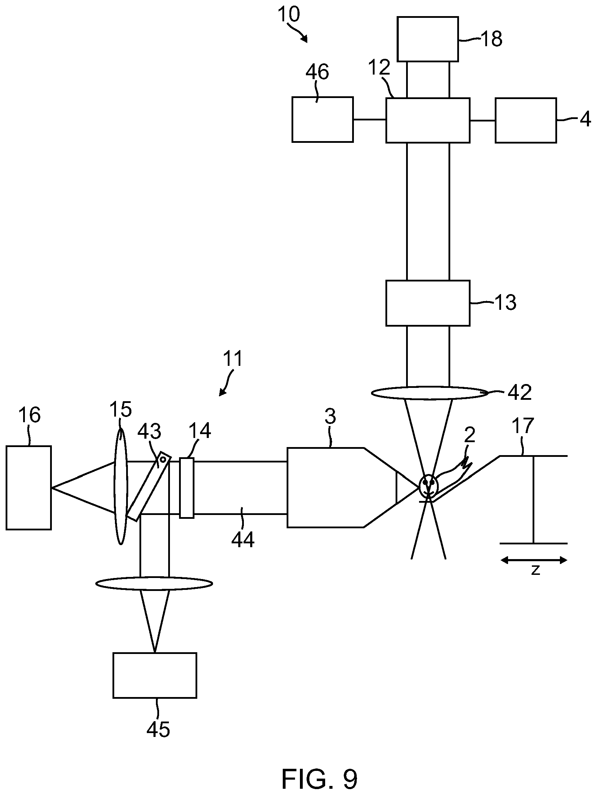

Figur 9 zeigt eine weitere Ausführungsform der Erfindung, wobei gleiche Bauelemente im Vergleich zu dem Ausführungsbeispiel gemäß Figur 4 mit gleichen Bezugszeichen bezeichnet sind. Zusätzlich dargestellt ist ein Beleuchtungsobjektiv 42, welches zusätzlich zu der Zoomoptik 13 vorgesehen sein kann. Das Beleuchtungsobjektiv kann allerdings auch Teil des optischen Zooms sein, wie dies zum Beispiel in dem Ausführungsbeispiel gemäß Figur 6 der Fall ist.

Im Gegensatz zur Beleuchtung mit einem kontinuierlichen Laser (continuous wave CW) wird bei der Multiphoton-Fluoreszenz-Mikroskopie ein gepulster Laser verwendet, welcher langwellige Anregungs-Photonen sendet, welche eine relativ niedrige Energie haben und damit besonders probenschonend sind, was insbesondere bei biologischen Proben wichtig ist. Ebenso wie die Detektion des SPIM-Signals kann auch mit einem umschaltbaren Spiegel 43 aus dem in z-Richtung verlaufenden Detektions-Strahlengang 44 ein Multiphoton-Signal ausgekoppelt werden und von einem Photomultiplier oder einer Avalanche Photodiode 45 erfasst werden. Im Übrigen wird das SPIM-Signal von der Kamera 16 wie bereits anhand von Figur 4 beschrieben erfasst.

Sofern die Kamera 16 schnell genug arbeitet, ist es als eine Untervariante zu dem in Figur 9 dargestellten Ausführungsbeispiel auch möglich, auf den umschaltbaren Spiegel 43 zu verzichten und stattdessen die Kamera 16 zur Erfassung des Multiphoton-Signals zu verwenden. Da bei einer Multiphoton-Beleuchtung mit einer Erfassung des Signals in z-Richtung, das heißt senkrecht zur Beleuchtungsrichtung, für jeden Beleuchtungspunkt auf dem Objekt auf der Kamera 16 eine Linie abgebildet wird, und durch den Scanner-Vorgang in x-Richtung sequenziell für eine Scan-Linie auf dem Objekt, die sich in x-Richtung erstreckt, auf der Kamera 16 sequenziell eine Fläche beleuchtet wird, muss softwaretechnisch eine Datenreduktion erfolgen, welche diese beleuchtete Fläche auf die Abbildung einer Linie zurückführt. Durch ein Scannen in z-Richtung können dann sequenziell mehrere Linien auf dem Objekt erfasst werden, welche zu einem Flächenbild des Objekts weiterverarbeitet werden können.

In einfachen Worten ausgedrückt wird gemäß dieser Untervariante der SPIM-Signalerfassungs-Aufbau zu einer Multiphoton-Signalerfassung verwendet, was mit schnellen Kameras möglich ist, welche beispielsweise bis zu 1000 Bilder pro Sekunde im Format 512x512 erfassen können.

Ein besonderer Vorteil den SPIM-Signalerfassungs-Aufbau für die Multiphoton-Signalerfassung zu verwenden liegt in einer deutlich gesteigerten Signalausbeute, was unter anderem auf folgenden Zusammenhang zurückzuführen ist: Bei der Lightsheet-Erzeugung verwendet man typischerweise Beleuchtungsobjektive mit geringer numerischer Apertur, beispielsweise Verwendung eines 1x Objektivs im Bereich von 0.04 NA. Verwendet man nun den SPIM Detektionsweg zur Detektion des erzeugten Signals in der Multiphoton Beleuchtung kann man deutlich höhere Signalausbeuten erzielen, da die verwendeten Objektive eine viel höhere numerische Apertur (NA) besitzen (beispielsweise um 1.0 NA). Dies bedeutet einen Signalgewinn von mehr als einem Faktor 20.

Wird der SPIM Detektionsstrahlengang (in z-Richtung) für das Aufsammeln des Fluoreszenzlichtes verwendet und das Licht auf einen Photomultiplier oder einer APD oder APD Array oder gemäß der oben beschriebenen Untervariante direkt auf eine schnelle Kamera gelenkt, wird eine deutlich höhere Effizienz erreicht als bei der Verwendung der Beleuchtungsoptik zur Signalerfassung in y-Richtung, da in der Regel die verwendete numerische Apertur des Beleuchtungssystems geringer ist als die des Detektionssystems der SPIM Anordnung.

Die Verwendung von Multiphoton hat mehrere Vorteile. Es werden fast ausschließlich nur die Fluorochrome innerhalb des Fokus angeregt, weil zur Anregung mehrere Photonen mehr oder weniger gleichzeitig ankommen müssen, was fast nur im Fokus passiert, oder umgekehrt ausgedrückt ist die Anregungswahrscheinlichkeit außerhalb des Fokus sehr gering. Ein weiterer Vorteil ist die höhere Eindringtiefe bei der Verwendung von Wellenlängen im IR Bereich (Streuung ist geringer). Ein weiterer Vorteil besteht darin, dass kein Pinhole notwendig ist, es kann also alles emittierte Licht dem Beleuchtungsfokus zugeordnet werden. Daher ist es auch möglich, Licht aus allen Richtungen zu sammeln. Im Gegensatz dazu ist es bei konfokaler Mikroskopie erforderlich, gestreutes und gebeugtes Licht zu unterdrücken, was die Signalausbeute reduziert. Ganz abgesehen von all diesen Vorteilen in der höheren Signalausbeute bei probeschonend geringer Beleuchtungsintensität liegt ein baulicher Vorteil darin, dass die ohnehin schon vorhandene Detektionsoptik des SPIM-Mikroskops für diese Multiphoton-Signalerfassung verwendet werden kann, so dass sich alle diese Vorteile ohne weiteren konstruktiven Aufwand mit nur relativ geringem softwaretechnischem Aufwand verwirklichen lassen.

Durch die Anwendung der STED-Technik lässt sich außerdem die bereits hohe Auflösung aufgrund der Multiphoton-Beleuchtung noch weiter steigern, d.h. eine Auflösung in Detektionsrichtung von etwa 300 nm im Multiphoton-Betrieb bis auf eine Auflösung von wenigen nm im Multiphotonplus-STED-Betrieb verbessern. In anderen Worten ergibt sich ein synergistischer Effekt durch die gesteigerte Signalausbeute aufgrund der SPIM-Detektionsoptik plus der bereits hohen Auflösung im Multiphoton-Betriebsmodus plus eine noch weitere Verbesserung der Auflösung durch STED. Der besondere bauliche Vorteil, welcher von der Erfindung verwirklicht wird, liegt darin, dass 3 grundsätzlich unterschiedliche Kategorien von Mikroskopen in einem einzigen Aufbau verwirklicht sind, nämlich ein konfokales Mikroskop, ein SPIM-Mikroskop, und ein Multiphoton-Mikroskop, wobei diese 3 Kategorien von Mikroskopen jeweils noch in ihrer Auflösung durch wahlweises Zuschalten des STED-Strahls modifiziert werden können, womit sich also in einem einzigen Aufbau 6 unterschiedliche Betriebsmodi verwirklichen lassen.

Softwaretechnisch ist es auch möglich, die von der Kamera 16 aufgenommenen Daten zeilen- oder pixelweise zu trennen und somit gleichzeitig ein SPIM-Bild und ein Multiphoton-Bild zu erzeugen. Damit könnte dann sogar auf eine Umschaltung zwischen SPIM-Betrieb und Multiphoton-Betrieb verzichtet werden, oder der gleichzeitige SPIM-Betrieb und Multiphoton-Betrieb kann als eine weitere Schaltoption zu dem wahlweisen SPIM-Betrieb oder Multiphoton-Betrieb verwirklicht werden.

Zusammenfassend wird bei dem erfindungsgemäßen Mikroskop ein Teilaspekt der konfokalen Mikroskopie genutzt, nämlich der Teilaspekt der Beleuchtungsoptik, um ein Bild nach der SPIM-Technologie zu erzeugen, wobei diese Beleuchtungsoptik überdies mit einer Zoom-Optik modifiziert wurde. Erfindungsgemäß lässt sich darüber hinaus auch noch ein konfokales Bild erzeugen, wenn auch eine Dimension geringer als das mit der SPIM-Technologie erzeugte Bild, oder alternativ oder zusätzlich zu dem konfokalen Bild lässt sich ein Multiphoton-Bild erzeugen, was auch anstatt des SPIM-Bildes erfolgen kann. Dadurch lässt sich nicht nur das nach der SPIM-Technologie erzeugte Bild wesentlich flexibler beeinflussen, sondern es lassen sich zusätzliche Bildinformationen konfokal oder durch Multiphoton-Detektion ermitteln, die sich je nach Anwendung auch als ein Overlay in das SPIM-Bild bzw. das Multiphoton-Bild kombinieren lassen. Durch Zu- oder Abschaltung eines STED-Strahles lässt sich das Bild noch weiter beeinflussen bzw. es lassen sich sogar noch weitere Datenströme für verschiedene Bilder erzeugen, welche überdies den Vorteil haben, simultan erzeugt zu werden. Das erfindungsgemäße Mikroskop lässt sich damit vielseitiger verwenden, wobei sich synergistische Effekte in den Möglichkeiten der Bild-Beeinflussung und gleichzeitig in der Vielzahl auswertbarer Bildinformation verwirklichen lassen.

## Patentansprüche

1. STED-SPIM-Mikroskop mit:
einer Anregungslichtquelle (4), welche einen Anregungs-Lichtstrahl (41) aus einer y-Richtung auf ein abzubildendes Objekt (2) sendet; und
eine erste Detektionseinrichtung, welche in z-Richtung von einem Objekt (2) ausgesendetes Fluoreszenzlicht und gegebenenfalls reflektiertes Licht erfasst, wobei sich die z-Richtung im Wesentlichen senkrecht zur y-Richtung erstreckt,
einen ersten x-Scanner (12), welcher den Anregungs-Lichtstrahl (41) in einer x-Richtung scannt, wobei sich die x-Richtung im Wesentlichen senkrecht zur y-Richtung und zur z-Richtung erstreckt und so eine von der x-Richtung und y-Richtung aufgespannten Ebene sequentiell ausgeleuchtet wird;
**dadurch gekennzeichnet, dass**
die erste Detektionseinrichtung eine Kamera (16) ist, welche ein 2-dimensionales Bild mit Ortszuweisung detektiert;
durch das Scannen des Anregungs-Lichtstrahls sequentiell ein Lightsheet aufgebaut wird, welches ein Volumen im Objekt ausleuchtet,
eine Abregungslichtquelle (46) vorgesehen ist, welche wenigstens einen das sequentiell erzeugte Lightsheet in z-Richtung verdünnenden Abregungs-Lichtstrahl (40) aus der y-Richtung auf das abzubildende Objekt sendet, wobei der Abregungs-Lichtstrahl (40) wenigstens ein in z-Richtung zum Anregungs-Lichtstrahl (41) versetztes Intensitätsmaximum aufweist und parallel zu dem Anregungs-Lichtstrahl (41) in x-Richtung gescannt wird,
und dass ein Schalter vorgesehen ist, mittels welchem ein Betriebsmodus zwischen einem ersten Betriebsmodus in Form von normalem SPIM-Betrieb ohne Zuschaltung des Abregungs-Lichtstrahls (40) und einem zweiten Betriebsmodus in Form von SPIM-plus-STED-Betrieb mit Zuschaltung des Abregungs-Lichtstrahls (40) auswählbar ist.

2. STED-SPIM-Mikroskop nach Anspruch 1, **gekennzeichnet durch** einen Abregungs-Lichtstrahl-Modulator mittels welchem der Abregungs-Lichtstrahl (40) einer derartigen Modulation unterzogen wird, dass dieser im Querschnitt in z-Richtung wenigstens zwei Intensitätsmaxima mit einer dazwischen befindlichen Nullstelle aufweist, welche sich in z-Richtung im Wesentlichen im Zentrum des Anregungs-Lichtstrahls (41) befindet.

3. STED-SPIM-Mikroskop nach Anspruch 2, **gekennzeichnet durch** eine Phasenplatte, welche den Abregungs-Lichtstrahl (40) moduliert.

4. STED-SPIM-Mikroskop nach einem der vorangehenden Ansprüche, **gekennzeichnet durch** einen Anregungs-Lichtstrahl-Modulator mittels welchem der Anregungs-Lichtstrahl (41) zu einem Besselbeam modulierbar ist.

5. STED-SPIM-Mikroskop nach Anspruch 4, **dadurch gekennzeichnet, dass** der Anregungs-Lichtstrahl-Modulator eine Tunable Acoustic Gradient Index of Refraction (TAG) Linse ist.

6. STED-SPIM-Mikroskop nach Anspruch 4, **dadurch gekennzeichnet, dass** der Anregungs-Lichtstrahl-Modulator ein Axicon ist.

7. STED-SPIM-Mikroskop nach einem der vorangehenden Ansprüche, **gekennzeichnet durch** wenigstens ein Acousto Optical Element mittels welchem wenigstens der Anregungs-Lichtstrahl (41) modulierbar ist.

8. STED-SPIM-Mikroskop nach Anspruch 7, **dadurch gekennzeichnet, dass** das Acousto Optical Element ein Acousto Optical Deflector (AOD) ist.

9. STED-SPIM-Mikroskop nach Anspruch 7, **dadurch gekennzeichnet, dass** das Acousto Optical Element ein Acousto Optical Tunable Filter (AOTF) zum Einstellen der Frequenz des Anregungs-Lichtstrahls (41) und der Intensität ist.

10. STED-SPIM-Mikroskop nach einem der Ansprüche 7 bis 9, **dadurch gekennzeichnet, dass** der Abregungs-Lichtstrahl (40) eine konstante Frequenz aufweist.

11. STED-SPIM-Mikroskop nach einem der vorangehenden Ansprüche, **gekennzeichnet durch** wenigstens einen Intensitätsregler mittels welchem die Intensitäten des Anregungs-Lichtstrahls (41) und Abregungs-Lichtstrahls (40) einstellbar sind.

12. STED-SPIM-Mikroskop nach Anspruch 11, **dadurch gekennzeichnet, dass** der Intensitätsregler ein Acousto Optical Element beinhaltet.

13. STED-SPIM-Mikroskop nach Anspruch 2, **dadurch gekennzeichnet, dass** der Abregungs-Lichtstrahl-Modulator eine Tunable Acoustic Gradient Index of Refraction (TAG) Linse ist.

14. STED-SPIM-Mikroskop nach Anspruch 2, **dadurch gekennzeichnet, dass** der Abregungs-Lichtstrahl-Modulator ein Spatial Light Modulator (SLM) ist.

15. STED-SPIM-Mikroskop nach einem der vorhergehenden Ansprüche 1 bis 14, **dadurch gekennzeichnet, dass** der Schalter derart ausgebildet ist, dass dieser eine dauerhafte Auswahl zwischen den vorgenannten ersten und zweiten Betriebsmodi einstellt.

16. STED-SPIM-Mikroskop nach einem der vorhergehenden Ansprüche 1 bis 14, **dadurch gekennzeichnet, dass** der Schalter derart ausgebildet ist, das dieser mit einer bestimmten Taktfrequenz automatisch zwischen den beiden vorgenannten ersten und zweiten Betriebsmodi hin- und herschaltet.

17. STED-SPIM-Mikroskop nach Anspruch 16, **gekennzeichnet durch** eine Bildverarbeitungseinheit, welche das von der Kamera (16) in der ersten Detektionsrichtung detektierte Licht nach den jeweiligen ersten und zweiten Betriebsmodi mit der Taktfrequenz in 2 Datenströme separiert, welche gleichzeitig ein Bild gemäß dem ersten Betriebsmodus und ein Bild gemäß dem zweiten Betriebsmodus erzeugen.

18. STED-SPIM-Mikroskop nach einem der vorangehenden Ansprüche, **gekennzeichnet durch** eine Beleuchtungsoptik mit einem im Strahlengang des Anregungs-Lichtstrahls (41) angeordneten optischen Zoom (13) in welchem Linsengruppen (25, 26) relativ zueinander mechanisch verschoben werden und so durch eine Veränderung der numerischen Apertur der Fokus des sequentiell erzeugten Lightsheets verlängert bzw. verkürzt wird, womit die Länge des von dem Lightsheet in dem Objekt (2) ausgeleuchteten Feldes in der y-Beleuchtungsrichtung verlängerbar bzw. verkürzbar ist.

19. STED-SPIM-Mikroskop nach einem der vorangehenden Ansprüche, **gekennzeichnet durch** einen Fotodetektor (19), welcher von dem Objekt (2) entgegen der x-Richtung als eine zweite Detektionsrichtung ausgesendetes Detektionslicht in Form von Fluoreszenzlicht und/oder reflektiertem Licht erfasst.

20. STED-SPIM-Mikroskop nach Anspruch 19, **dadurch gekennzeichnet, dass** parallel zu dem in z-Richtung erfassten zweidimensionalen Weitfeldbild entsprechend der SPIM-Technik konfokal ein eindimensionales Bild des Objekts (2) erzeugt wird, welches eine sich in der x-Richtung ersteckende Linie aufspannt.

21. STED-SPIM-Mikroskop nach Anspruch 19, **gekennzeichnet durch** einen z-Scanner, welcher das Objekt (2) in z-Richtung bewegt, so dass sequenziell mehrere in z-Richtung im Abstand zueinander angeordnete Lightsheets in jeweiligen Beleuchtungsebenen erzeugt werden, wobei ein Abstand zwischen den jeweiligen Lightsheets und der Kamera konstant bleibt.

22. STED-SPIM-Mikroskop nach einem der Ansprüche 19 bis 21, **gekennzeichnet durch** einen weiteren Schalter, welcher zwischen den folgenden Betriebsmodi umschaltbar ist:
i) konfokale Detektion von Detektionslicht entgegen der y-Beleuchtungsrichtung;
ii) SPIM-Detektion von Weitfeld-Detektionslicht in z-Richtung;
iii) Multiphoton-Detektion von Weitfeld-Detektionslicht in z-Richtung;
iv) gleichzeitige Detektion der vorgenannten konfokalen Detektion und SPIM-Detektion; und
v) gleichzeitige Detektion der vorgenannten konfokalen Detektion und Multiphoton-Detektion.

23. STED-SPIM-Mikroskop nach Anspruch 22, **dadurch gekennzeichnet, dass** die Betriebsmodi i) - v) jeweils wahlweise mit oder ohne Zuschaltung eines STED-Abregungsstrahls erfolgt.

## Claims

1. STED-SPIM microscope, having:
an excitation light source (4) transmitting an illumination light beam (41) from a y-direction onto an object (2) to be imaged; and
a first detection device detecting fluorescence light emitted by an object (2) in the z-direction and possibly reflected light, wherein the z-direction extends substantially perpendicularly to the y-direction,
a first x-scanner (12) scanning the excitation light beam (41) in an x-direction, wherein the x-direction extends substantially perpendicularly to the y-direction and to the z-direction and a plane defined by the x-direction and y-direction is sequentially fully illuminated;
**characterized in that**
the first detection device is a camera (16) detecting a 2-dimensional image with location assignment;
a light sheet that fully illuminates a volume in the object is created by sequentially scanning the excitation light beam,
a deexcitation light source (46) is provided that transmits at least one deexcitation light beam (40) that thins the sequentially produced light sheet in the z-direction, from the y-direction onto the object to be imaged, wherein the deexcitation light beam (40) has at least one intensity maximum that is offset in the z-direction relative to the excitation light beam (41) and is scanned parallel to the excitation light beam (41) in the x-direction,
and **in that** a switch is provided that can be used to select an operating mode between a first operating mode in the form of normal SPIM operation without the addition of the deexcitation light beam (40) and a second operating mode in the form of SPIM-plus-STED operation with the addition of the deexcitation light beam (40).

2. STED-SPIM microscope according to Claim 1, **characterized by** a deexcitation light beam modulator with which the deexcitation light beam (40) is modulated such that it has at least two intensity maxima in cross section in the z-direction with a zero between them that is located in the z-direction substantially in the centre of the excitation light beam (41) .

3. STED-SPIM microscope according to Claim 2, **characterized by** a phase plate modulating the deexcitation light beam (40).

4. STED-SPIM microscope according to one of the preceding claims, **characterized by** an excitation light beam modulator with which the excitation light beam (41) is able to be modulated to form a Bessel beam.

5. STED-SPIM microscope according to Claim 4, **characterized in that** the excitation light beam modulator is a tunable acoustic gradient index of refraction (TAG) lens.

6. STED-SPIM microscope according to Claim 4, **characterized in that** the excitation light beam modulator is an axicon.

7. STED-SPIM microscope according to one of the preceding claims, **characterized by** at least one acousto-optical element with which at least the excitation light beam (41) is able to be modulated.

8. STED-SPIM microscope according to Claim 7, **characterized in that** the acousto-optical element is an acousto-optical deflector (AOD).

9. STED-SPIM microscope according to Claim 7, **characterized in that** the acousto-optical element is an acousto-optical tunable filter (AOTF) for setting the frequency of the excitation light beam (41) and the intensity.

10. STED-SPIM microscope according to one of Claims 7 to 9, **characterized in that** the deexcitation light beam (40) has a constant frequency.

11. STED-SPIM microscope according to one of the preceding claims, **characterized by** at least one intensity regulator with which the intensities of the excitation light beam (41) and deexcitation light beam (40) are able to be set.

12. STED-SPIM microscope according to Claim 11, **characterized in that** the intensity regulator contains an acousto-optical element.

13. STED-SPIM microscope according to Claim 2, **characterized in that** the deexcitation light beam modulator is a tunable acoustic gradient index of refraction (TAG) lens.

14. STED-SPIM microscope according to Claim 2, **characterized in that** the excitation light beam modulator is a spatial light modulator (SLM).

15. STED-SPIM microscope according to one of the preceding Claims 1 to 14, **characterized in that** the switch is embodied such that it sets a permanent selection between the aforementioned first and second operating modes.

16. STED-SPIM microscope according to one of the preceding Claims 1 to 14, **characterized in that** the switch is embodied such that it switches automatically between the two aforementioned first and second operating modes at a specific clock frequency.

17. STED-SPIM microscope according to Claim 16, **characterized by** an image processing unit that separates the light detected by the camera (16) in the first detection direction in accordance with the respective first and second operating modes with the clock frequency into 2 data streams that simultaneously produce an image according to the first operating mode and an image according to the second operating mode.

18. STED-SPIM microscope according to one of the preceding claims, **characterized by** an illumination optical unit having a zoom unit (13) that is arranged in the beam path of the excitation light beam (41) and in which lens groups (25, 26) are mechanically displaced relative to one another and thus, by varying the numerical aperture, the focus of the sequentially produced light sheet is lengthened or shortened, whereby the length of the field that the light sheet fully illuminates in the object (2) is able to be lengthened or shortened in the y-illumination direction.

19. STED-SPIM microscope according to one of the preceding claims, **characterized by** a photodetector (19) capturing detection light that has been emitted by the object (2) counter to the x-direction as a second detection direction in the form of fluorescence light and/or reflected light.

20. STED-SPIM microscope according to Claim 19, **characterized in that** a one-dimensional image of the object (2) spanning a line extending in the x-direction is confocally produced parallel to the two-dimensional widefield image that is captured in the z-direction in accordance with the SPIM technique.

21. STED-SPIM microscope according to Claim 19, **characterized by** a z-scanner that moves the object (2) in the z-direction, with the result that a plurality of light sheets, arranged at a distance from one another in the z-direction, are produced sequentially in respective illumination planes, wherein a distance between the respective light sheets and the camera remains constant.

22. STED-SPIM microscope according to one of Claims 19 to 21, **characterized by** a further switch that is switchable between the following operating modes:
i) confocal detection of detection light counter to the y-illumination direction;
ii) SPIM detection of widefield detection light in the z-direction;
iii) multiphoton detection of widefield detection light in the z-direction;
iv) simultaneous detection of the aforementioned confocal detection and SPIM detection, and
v) simultaneous detection of the aforementioned confocal detection and multiphoton detection.

23. STED-SPIM microscope according to Claim 22, **characterized in that** the operating modes i) - v) take place in each case optionally with or without the addition of an STED deexcitation beam.

## Revendications

1. Microscope STED-SPIM comprenant :
une source lumineuse d'excitation (4) qui émet un faisceau lumineux d'excitation (41) dans une direction y vers un objet (2) dont l'image doit être formée ; et
un premier dispositif de détection qui détecte la lumière fluorescente émise par un objet (2) dans une direction z et la lumière éventuellement réfléchie, dans lequel la direction z s'étend sensiblement perpendiculairement à la direction y,
un premier dispositif de balayage x (12) qui balaye le faisceau lumineux d'excitation (41) dans une direction x, dans lequel la direction x s'étend sensiblement perpendiculairement à la direction y et à la direction z, de manière à éclairer séquentiellement un plan défini par la direction x et la direction y ;
**caractérisé en ce que**
le premier dispositif de détection est une caméra (16) qui détecte une image bidimensionnelle associée à une localisation ;
une nappe lumineuse est créée séquentiellement par le balayage du faisceau lumineux d'excitation et éclaire un volume dans l'objet,
il est prévu une source lumineuse de désexcitation (46) qui émet au moins un faisceau lumineux de désexcitation (40) dans la direction y vers l'objet dont l'image doit être formée, lequel faisceau dilue la nappe lumineuse générée séquentiellement dans la direction z, dans lequel le faisceau lumineux de désexcitation (40) présente au moins un maximum d'intensité décalé dans la direction z par rapport au faisceau lumineux d'excitation (41) et est balayé dans la direction x parallèlement au faisceau lumineux d'excitation (41),
et **en ce qu'**il est prévu un commutateur permettant de sélectionner un mode de fonctionnement entre un premier mode de fonctionnement sous forme de fonctionnement SPIM normal sans activation du faisceau lumineux de désexcitation (40) et un deuxième mode de fonctionnement sous forme de fonctionnement SPIM-plus-STED avec activation du faisceau lumineux de désexcitation (40).

2. Microscope STED-SPIM selon la revendication 1, **caractérisé par** un modulateur de faisceau lumineux de désexcitation au moyen duquel le faisceau lumineux de désexcitation (40) est soumis à une modulation de manière à ce que, en coupe transversale dans la direction z, il présente au moins deux maxima d'intensité avec un point zéro situé entre eux, qui est situé dans la direction z sensiblement au centre du faisceau lumineux d'excitation (41) .

3. Microscope STED-SPIM selon la revendication 2, **caractérisé par** une lame de phase qui module le faisceau lumineux de désexcitation (40).

4. Microscope STED-SPIM selon l'une des revendications précédentes, **caractérisé par** un modulateur de faisceau lumineux d'excitation au moyen duquel le faisceau lumineux d'excitation (41) peut être modulé en un faisceau Bessel.

5. Microscope STED-SPIM selon la revendication 4, **caractérisé en ce que** le modulateur de faisceau lumineux d'excitation est une lentille à indice de réfraction à gradient acoustique accordable (TAG).

6. Microscope STED-SPIM selon la revendication 4, **caractérisé en ce que** le modulateur de faisceau lumineux d'excitation est un axicon.

7. Microscope STED-SPIM selon l'une des revendications précédentes, **caractérisé par** au moins un élément acousto-optique au moyen duquel au moins le faisceau lumineux d'excitation (41) est modulable.

8. Microscope STED-SPIM selon la revendication 7, **caractérisé en ce que** l'élément acousto-optique est un déviateur acousto-optique (AOD).

9. Microscope STED-SPIM selon la revendication 7, **caractérisé en ce que** l'élément acousto-optique est un filtre acousto-optique accordable (AOTF) destiné à régler la fréquence du faisceau lumineux d'excitation (41) et l'intensité.

10. Microscope STED-SPIM selon l'une des revendications 7 à 9, **caractérisé en ce que** le faisceau lumineux de désexcitation (40) présente une fréquence constante.

11. Microscope STED-SPIM selon l'une des revendications précédentes, **caractérisé par** au moins un régulateur d'intensité au moyen duquel les intensités du faisceau lumineux d'excitation (41) et du faisceau lumineux de désexcitation (40) sont réglables.

12. Microscope STED-SPIM selon la revendication 11, **caractérisé en ce que** le régulateur d'intensité comprend un élément acousto-optique.

13. Microscope STED-SPIM selon la revendication 2, **caractérisé en ce que** le modulateur de faisceau lumineux de désexcitation est une lentille à indice de réfraction à gradient acoustique accordable (TAG).

14. Microscope STED-SPIM selon la revendication 2, **caractérisé en ce que** le modulateur de faisceau lumineux de désexcitation est un modulateur spatial de lumière (SLM).

15. Microscope STED-SPIM selon l'une des revendications 1 à 14 précédentes, **caractérisé en ce que** le commutateur est conçu de manière à établir une sélection permanente entre les premier et deuxième modes de fonctionnement susmentionnés.

16. Microscope STED-SPIM selon l'une des revendications 1 à 14 précédentes, **caractérisé en ce que** le commutateur est conçu de manière à basculer automatiquement entre les deux premier et deuxième modes de fonctionnement susmentionnés à une fréquence d'horloge déterminée.

17. Microscope STED-SPIM selon la revendication 16, **caractérisé par** une unité de traitement d'image qui sépare à la fréquence d'horloge la lumière détectée par la caméra (16) dans la première direction de détection selon les premier et deuxième modes de fonctionnement respectifs, en 2 flux de données qui génèrent simultanément une image selon le premier mode de fonctionnement et une image selon le second mode de fonctionnement.

18. Microscope STED-SPIM selon l'une des revendications précédentes, **caractérisé par** une optique d'éclairement comprenant un zoom optique (13) disposé sur le chemin du faisceau lumineux d'excitation (41), dans lequel des groupes de lentilles (25, 26) sont mécaniquement déplacés les uns par rapport aux autres de sorte que le foyer de la nappe lumineuse générée séquentiellement est allongé ou raccourci par une modification de l'ouverture numérique, d'où il résulte que la longueur du champ éclairé par la nappe lumineuse dans l'objet (2) peut être allongée ou raccourcie dans la direction d'éclairement y.

19. Microscope STED-SPIM selon l'une des revendications précédentes, **caractérisé par** un photodétecteur (19) qui détecte la lumière de détection sous forme de lumière fluorescente et/ou de lumière réfléchie émise par l'objet (2) dans la direction opposée à la direction x en tant que deuxième direction de détection.

20. Microscope STED-SPIM selon la revendication 19, **caractérisé en ce qu'**une image unidimensionnelle de l'objet (2) est générée de manière confocale parallèlement à l'image bidimensionnelle à grand champ détectée dans la direction z selon la technique SPIM, laquelle image couvre une ligne s'étendant dans la direction x.

21. Microscope STED-SPIM selon la revendication 19, **caractérisé par** un dispositif de balayage z qui déplace l'objet (2) dans la direction z de manière à ce qu'une pluralité de nappes lumineuses espacées dans la direction z soient générées séquentiellement dans des plans d'éclairement respectifs, dans lequel une distance entre les nappes lumineuses respectives et la caméra reste constante.

22. Microscope STED-SPIM selon l'une des revendications 19 à 21, **caractérisé par** un autre commutateur qui peut être commuté entre les modes de fonctionnement suivants :
i) détection confocale de la lumière de détection dans la direction d'éclairement y ;
ii) détection SPIM de la lumière de détection à grand champ dans la direction z ;
iii) détection multiphotons de la lumière de détection à grand champ dans la direction z ;
iv) détection simultanée de la détection confocale et de la détection SPIM susmentionnées ; et
v) détection simultanée de la détection confocale et de la détection multiphotons susmentionnées.

23. Microscope STED-SPIM selon la revendication 22, **caractérisé en ce que** les modes de fonctionnement i) - v) sont respectivement mis en œuvre sélectivement avec ou sans activation d'un faisceau de désexcitation STED.
